# EUROPÄISCHE PATENTSCHRIFT

(11) **EP 2 534 395 B1**
(45) Veröffentlichungstag und Bekanntmachung des Hinweises auf die Patenterteilung: **05.08.2015**
(21) Anmeldenummer: 10798065.8
(22) Anmeldetag: 17.12.2010
(51) Int. Cl.: F16H 47/04

(54) **GETRIEBEVORRICHTUNG MIT LEISTUNGSVERZWEIGUNG**
TRANSMISSION DEVICE WITH POWER SPLIT
DISPOSITIF DE TRANSMISSION A DERIVATION DE PUISSANCE

(30) Priorität: 09.02.2010 DE 102010001698
(43) Veröffentlichungstag der Anmeldung: 19.12.2012
(73) Patentinhaber: ZF Friedrichshafen AG, 88038 Friedrichshafen (DE)
(72) Erfinder: FISCHER, Roland, 88094 Oberteuringen (DE); MORRISON, Robert, 88069 Tettnang (DE); SIBER, Michael, 72362 Nusplingen (DE)
(86) Internationale Anmeldenummer: PCT/EP2010/070041
(87) Internationale Veröffentlichungsnummer: WO 2011/098180

(56) Entgegenhaltungen:
- WO-A1-2009/047037
- WO-A1-2009/047038
- DE-A1-102007 047 511

## Beschreibung

Die Erfindung betrifft eine Getriebevorrichtung mit Leistungsverzweigung gemäß der im Oberbegriff des Patentanspruchs 1 näher definierten Art, und wie sie aus der WO 2009047038 A bekannt ist.

Ein Leistungsverzweigungsgetriebe, insbesondere für eine Arbeitsmaschine, wie beispielsweise einem Radlader, ist aus der DE 10 2007 047 194 A1 bekannt und ist mit einem hydrostatischen und einem mechanischen Leistungszweig ausgebildet. Die Leistungszweige werden über ein Summierungsgetriebe summiert, wobei dem Summierungsgetriebe ein Reversiergetriebe vorgeschaltet und ein Gangschaltungsgetriebe nachgeschaltet sind.

Über das Leistungsverzweigungsgetriebe sind jeweils zwei Fahrbereiche für Vorwärtsfahrt und Rückwärtsfahrt darstellbar, innerhalb welchen eine Übersetzung des Leistungsverzweigungsgetriebes stufenlos über eine Hydrostateinrichtung variierbar ist. Die Fahrbereiche sind durch Abschalten eines zugeschalteten Schaltelementes und durch Zuschalten eines abgeschalteten Schaltelementes wechselbar.

Nachteilhafterweise ist ein zum Darstellen eines zweiten Fahrbereiches des Leistungsverzweigungsgetriebes vorgesehenes Schaltelement auf einer Hydrostatwelle der Hydrostateinrichtung angeordnet, weshalb eine Anbindung der Hydrostatwelle an einen mechanischen Leistungszweig konstruktiv aufwendig ist. Dies resultiert unter anderem aus der Tatsache, dass die Hydrostateinrichtung zur Schwingungsdämpfung üblicherweise über eine elastische Gummilagereinrichtung gelagert ist und daher im Verbindungsbereich zwischen der Hydrostateinrichtung und dem mechanischen Leistungszweig ein sich im Betrieb verändernder Achsversatz durch eine entsprechende gelenkig ausgeführte Verbindungseinrichtung auszugleichen ist. Dieser permanente Ausgleich führt jedoch ohne zusätzliche konstruktive Maßnahmen wiederum dazu, dass im Bereich des auf der Hydrostatwelle angeordneten Schaltelementes in unerwünschtem Umfang Schwingungen angeregt werden und sich eine Taumelneigung erhöht.

Des Weiteren ist das Leistungsverzweigungsgetriebe aufgrund der Anordnung des Schaltelementes auf der Hydrostatwelle durch einen hohen Bauraumbedarf gekennzeichnet, da die beiden Hydrostatwellen der Hydrostateinrichtung mit einem gewissen Abstand zueinander anzuordnen sind, um den für den Einbau des Schaltelementes auf der Hydrostatwelle erforderlichen Bauraum zur Verfügung stellen zu können.

Der vorliegenden Erfindung liegt daher die Aufgabe zugrunde, eine bauraumgünstige und konstruktiv einfache Getriebevorrichtung mit Leistungsverzweigung zur Verfügung zu stellen.

Erfindungsgemäß wird diese Aufgabe mit einer Getriebevorrichtung mit den Merkmalen des Patentanspruchs 1 gelöst.

Bei der Getriebevorrichtung mit Leistungsverzweigung ist ein Teil eines anliegenden Drehmomentes in einem ersten Leistungszweig wenigstens über eine Hydrostateinrichtung mit wenigstens zwei Hydrostatwellen und der andere Teil des Drehmomentes über einen über eine Leistungsverzweigungseinrichtung damit verbundenen zweiten Leistungszweig vorzugsweise über eine mechanische Einrichtung mit mehreren Vorgelegewellen zwischen einem Getriebeeingang und einem Getriebeausgang führbar. Es sind jeweils wenigstens zwei Fahrbereiche für Vorwärts- und Rückwärtsfahrt vorgesehen, die jeweils über wenigstens ein abzuschaltendes Schaltelement und wenigstens ein zuzuschaltendes Schaltelement umschaltbar sind.

Erfindungsgemäß ist jedes der Schaltelemente auf einer separaten Vorgelegewelle angeordnet und eine zur Darstellung eines weiteren Fahrbereiches vorgesehene Vorgelegewelle ist über ein Zahnrad mit einem mit einer Welle der Leistungsverzweigungseinrichtung wirkverbundenem Festrad koppelbar.

Dadurch, dass die Schaltelemente alle jeweils auf einer separaten Welle und insbesondere nicht auf einer Hydrostatwelle der Hydrostateinrichtung angeordnet sind, ist die Hydrostatwelle mit geringem konstruktivem Aufwand mit der Getriebeausgangswelle in Wirkverbindung bringbar.

Des Weiteren ist die erfindungsgemäße Getriebevorrichtung auch durch einen geringen Bauraumbedarf gekennzeichnet, da die Hydrostatwellen der Hydrostateinrichtung im Vergleich zu dem aus dem Stand der Technik bekannten Leistungsverzweigungsgetriebe mit geringerem Abstand zueinander anordenbar sind.

Zusätzlich ist die Getriebevorrichtung bei eingelegtem weiteren Fahrbereich durch die zusätzliche Vorgelegewelle, die mit der Leistungsverzweigungseinrichtung über ein Festrad koppelbar ist, und den darüber geführten Leistungsfluss ohne ein dynamisch belastetes Losrad betreibbar. Darüber hinaus ist die zusätzliche Vorgelegewelle mit einem vorzugsweise zugeordneten Schaltelement zum Zu- und Abschalten des weiteren Fahrbereiches bei der erfindungsgemäßen Getriebevorrichtung aufgrund des im Wesentlichen direkten Leistungsabgriffes im Bereich der Leistungsverzweigungseinrichtung zumindest bereichsweise außerhalb eines Getriebeölsumpfes anordenbar, womit Plantschverluste zumindest reduzierbar sind.

Die zur Leistungsverzweigung und zur Summierung der über die Leistungszweige führbaren Teile des anliegenden Drehmomentes vorgesehene Leistungsverzweigungseinrichtung ist bei einer weiteren vorteilhaften Ausführungsform der Getriebevorrichtung nach der Erfindung eine als Planetengetriebe ausgebildete Getriebeeinrichtung, welche zwei Sonnenräder aufweist, die mit gemeinsamen Doppelplanetenrädern in Eingriff stehen, die wiederum mit einem Hohlrad kämmen. Eine in radialer Richtung einen geringen Bauraum aufweisende Planetengetriebeeinrichtung ist auf einfache Art und Weise neben weiteren koaxial angeordneten Zahnrädern anordenbar, die mit weiteren Zahnrädern, welche auf parallel angeordneten Vorgelegewellen gelagert sind, in Eingriff stehen. Der geringe radiale Bauraumbedarf ermöglicht eine in axialer Richtung bauraumgünstige Anordnung der verschiedenen Zahnradpaarungen, womit die Getriebevorrichtung insgesamt in axialer Richtung wenig Bauraum beansprucht.

Steht das Zahnrad der zur Darstellung des weiteren Fahrbereiches vorgesehenen Vorgelegewelle mit einem mit dem Hohlrad des Leistungsverzweigungselementes fest verbundenen Festrad oder einem damit kämmenden Festrad in Eingriff, wird bei zugeschaltetem weiteren Fahrbereich auf einfache Art und Weise ein dynamisch belastetes Losrad auf konstruktiv einfache Art und Weise vermieden.

Bei einer weiteren vorteilhaften Ausführungsform der erfindungsgemäßen Getriebevorrichtung steht eine mit der zugeordneten Vorgelegewelle verbundene Schaltelementhälfte, vorzugsweise der Innenlamellenträger, eines ersten Schaltelementes, über welches der erste Fahrbereich in zugeschaltetem Betriebszustand des Schaltelementes darstellbar ist, über ein Zahnrad der Vorgelegewelle mit einer Getriebeausgangswelle in Wirkverbindung. Dadurch wird mit konstruktiv geringem Aufwand erreicht, dass im Bereich des ersten Schaltelementes bei hohen Fahrgeschwindigkeiten eine geringe Taumelneigung vorliegt und daraus resultierende Schleppmomente im Bereich des ersten Schaltelementes, die einen Wirkungsgrad der Getriebevorrichtung verschlechtern, reduziert sind bzw. thermische Zerstörung der Kupplung vermieden wird.

Bei einer weiteren konstruktiv einfachen Ausführungsform der erfindungsgemäßen Getriebevorrichtung ist das über das erste Schaltelement mit der zugeordneten Vorgelegewelle drehfest verbindbare Zahnrad mit der Getriebeausgangswelle wirkverbunden und das Festrad der Vorgelegewelle kämmt mit einem Festrad der der Hydrostateinrichtung zugeordneten Hydrostatwelle.

Ein Außenlamellenträger des ersten Schaltelementes ist mit der Vorgelegewelle und der Innenlamellenträger ist mit einem über das erste Schaltelement mit der zugeordneten Vorgelegewelle koppelbaren Zahnrad verbunden.

Ein über ein zweites Schaltelement, über welches der zweite Fahrbereich in zugeschaltetem Betriebszustand des zweiten Schaltelementes darstellbar ist, mit der zugeordneten Vorgelegewelle drehfest verbindbares Losrad kämmt bei einer weiteren vorteilhaften Ausführungsform der erfindungsgemäßen Getriebevorrichtung mit einem drehfest mit dem ersten Sonnenrad der Getriebeeinrichtung verbundenen Festrad und ein Festrad der Vorgelegewelle steht mit dem Zahnrad der dem ersten Schaltelement zugeordneten Vorgelegewelle in Wirkverbindung, womit der zweite Fahrbereich mit einer geringen Anzahl von Zahneingriffen im Bereich der mechanischen Einrichtung darstellbar ist.

Bei einer vorteilhaften Weiterbildung der Getriebevorrichtung nach der Erfindung ist zur Darstellung eines dritten Fahrbereiches ein weiteres auf einer zusätzlichen Vorgelegewelle des vorzugsweise mechanischen zweiten Leistungszweiges angeordnetes Schaltelement vorgesehen, welche ohne aufwändige konstruktive Maßnahmen in das bestehende Konzept der erfindungsgemäßen Getriebevorrichtung integrierbar ist, womit die erfindungsgemäße Getriebevorrichtung durch eine hohe Modularität gekennzeichnet ist und auf einfache Art und Weise an verschiedene Anwendungsfälle anpassbar ist.

Ein über das dritte Schaltelement, über welches der dritte Fahrbereich in zugeschaltetem Betriebszustand des dritten Schaltelementes darstellbar ist, mit der zugeordneten Vorgelegewelle drehfest verbindbares Losrad kämmt bei einer weiteren vorteilhaften Ausführungsform der erfindungsgemäßen Getriebevorrichtung mit einem weiteren Festrad der der Hydrostateinrichtung zugeordneten Hydrostatwelle und ein Festrad der Vorgelegewelle ist mit der Getriebeausgangswelle wirkverbunden, womit der dritte Fahrbereich ebenfalls mit einer möglichst geringen Anzahl von Zahneingriffen im Bereich der mechanischen Einrichtung darstellbar ist.

In einem ersten und in einem dritten Fahrbereich der Getriebevorrichtung ist die Leistung der beiden Leistungszweige über eine mit der Hydrostateinrichtung verbundenen Welle summierbar.

Ein Festrad eines Getriebeeingangs ist über ein Festrad einer weiteren Vorgelegewelle mit einer Hydraulikpumpe einer ersten Arbeitshydraulik und über ein Festrad einer zusätzlichen Vorgelegewelle mit einer Hydraulikpumpe einer zweiten Arbeitshydraulik verbindbar, wobei die Hydraulikpumpen in Abhängigkeit der Übersetzungen zwischen dem Festrad der Getriebeeingangswelle und den Festrädern der weiteren Vorgelegewellen jeweils mit der gleichen Drehzahl oder mit verschiedenen Drehzahlen antreibbar sind.

Eine konstruktiv einfache und mit geringem Aufwand betätigbare Ausgestaltung der erfindungsgemäßen Getriebevorrichtung ist dadurch gekennzeichnet, dass der Getriebeeingang über Fahrtrichtungsschaltelemente mit dem Planetenträger des Planetengetriebes in Wirkverbindung bringbar ist.

Bei einer weiteren vorteilhaften Ausführungsform ist über die zwischen dem Getriebeeingang und der Getriebeeinrichtung bzw. dem Planetengetriebe angeordneten Fahrtrichtungsschaltelemente zwischen einem Modus für Vorwärtsfahrt und einem Modus für Rückwärtsfahrt umschaltbar. Damit ist ein mit der erfindungsgemäßen Getriebevorrichtung ausgebildetes Fahrzeug mit geringem konstruktivem Aufwand sowie niedrigem Steuer- und Regelaufwand sowohl in Vorwärts- als auch in Rückwärtsfahrtrichtung betreibbar.

Um die erfindungsgemäße Getriebevorrichtung mit geringem konstruktivem Aufwand an einen im Fahrzeug vorhandenen Bauraum anpassen zu können, sind entweder die Festräder zwischen den Fahrtrichtungsschaltelementen und einem Getriebeeingang oder die Fahrtrichtungsschaltelemente zwischen den Festrädern und dem Getriebeeingang angeordnet.

Eine mit geringem Steuer- und Regelaufwand betreibbare Ausführungsform der Getriebevorrichtung ist im Bereich der Hydrostateinrichtung des ersten Leistungszweiges mit wenigstens einer ersten als Pumpe und als Motor betreibbaren Hydraulikeinheit und mit wenigstens einer über einen hydraulischen Kreislauf damit wirkverbundenen ebenfalls als Motor und als Pumpe betreibbaren zweiten Hydraulikeinheit ausgebildet, die beide verstellbar und vorzugsweise als Schrägachseneinheiten ausgeführt sind.

Um die Übersetzung der Getriebevorrichtung nach der Erfindung sowohl innerhalb eines Fahrbereiches sowie über alle Fahrbereiche hinweg stufenlos verändern zu können, sind ein Schluckvolumen und ein Fördervolumen der Hydraulikeinheiten bei einer vorteilhaften Ausführungsform der Getriebevorrichtung in einem Bereich von 0 % bis 100 % variierbar, wobei das anstehende Drehmoment bei maximalem Schluckvolumen einer Hydraulikeinheit und minimalem Fördervolumen der anderen Hydraulikeinheit vollständig über den die Hydrostateinrichtung aufweisenden ersten Leistungszweig und bei minimalem Schluckvolumen einer Hydraulikeinheit und maximalen Fördervolumen der anderen Hydraulikeinheit vollständig über den die mechanische Einheit aufweisenden zweiten Leistungszweig geführt wird.

Bei einer konstruktiv einfach ausgeführten Weiterbildung der erfindungsgemäßen Getriebevorrichtung ist die erste Hydraulikeinheit der Hydrostateinrichtung mit einem der Sonnenräder der Getriebeeinrichtung verbunden.

Wenigstens ein Teil des anliegenden Drehmoments ist bei einer weiteren konstruktiv einfach ausgebildeten Ausführungsform der erfindungsgemäßen Getriebevorrichtung über eines der Sonnenräder der Getriebeeinrichtung oder das Hohlrad in den die vorzugsweise mechanische Einrichtung aufweisenden zweiten Leistungszweig einleitbar.

Sind die Fahrbereichwechsel in der erfindungsgemäßen Getriebevorrichtung synchron durchführbar, sind die jeweils für die Umschaltung zwischen den Fahrbereichen vorgesehenen Schaltelemente bei einer Ausführung als Reibschaltelemente mit geringen Abmessungen dimensionierbar, da während der Umschaltvorgänge zwischen den Fahrbereichen nur geringe Reibarbeit im Bereich der Schaltelemente zu verrichten ist und daher auch nur wenig Reibleistung im Bereich der Schaltelemente entsteht.

Sowohl die in den Patentansprüchen angegebenen Merkmale als auch die im nachfolgenden Ausführungsbeispiel der erfindungsgemäßen Getriebevorrichtung angegebenen Merkmale sind jeweils für sich allein oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Getriebevorrichtung ergeben sich aus den Patentansprüchen und dem nachfolgend unter Bezugnahme auf die Zeichnung prinzipmäßig beschriebenen Ausführungsbeispiel.

Die einzige Figur der Zeichnung zeigt ein Getriebeschema eines Ausführungsbeispieles der Erfindungsgemäßen Getriebevorrichtung mit Leistungsverzweigung mit synchronem Bereichswechsel.

In der Figur ist ein Räderschema einer ersten Ausführungsform einer Getriebevorrichtung 1 mit Leistungsverzweigung und mit synchronem Bereichswechsel dargestellt. Ein Teil eines von einer Antriebsmaschine 2 anliegenden Drehmomentes ist in einem ersten Leistungszweig 3 über eine Hydrostateinrichtung 4 und der andere Teil des Drehmoments in einem zweiten Leistungszweig 5 über eine mechanische Einrichtung 6 zwischen einem Getriebeeingang bzw. einer Getriebeeingangswelle 7 und einem Getriebeausgang bzw. einer Getriebeausgangswelle 8 führbar. Die beiden Leistungszweige 3 und 5 stehen über eine Getriebeeinrichtung 9 in Wirkverbindung, die vorliegend eine als Planetengetriebe ausgebildete Getriebeeinrichtung ist.

Zwischen einer Motorausgangswelle 2A und der Getriebeeingangswelle 7 ist ein so genannter Schwingungsdämpfer 2B angeordnet, mittels welchem Drehungleichförmigkeiten im Bereich der Antriebsmaschine 2 gedämpft und nur zu einem geringen Teil in die Getriebevorrichtung 1 und den restlichen Teil des Antriebsstranges eines Fahrzeuges bzw. eines Baufahrzeuges eingeleitet werden.

Die Getriebevorrichtung 1 ist mit drei Fahrbereichen für Vorwärts- und Rückwärtsfahrt ausgeführt, welche jeweils über ein abzuschaltendes Schaltelement K1, K2 oder K3 und wenigstens ein zuzuschaltendes Schaltelement K1, K2 oder K3 umschaltbar sind.

Die Hydrostateinrichtung 4 des ersten Leistungszweiges 3 umfasst eine erste Hydraulikeinheit 10 und eine über einen in der Zeichnung nicht näher dargestellten hydraulischen Kreislauf damit wirkverbundene zweite Hydraulikeinheit 11, die über ein gemeinsames Joch verstellt werden und als Schrägachseneinheiten ausgeführt sind. Die beiden Hydraulikeinheiten 10 und 11 sind jeweils als Pumpe und als Motor betreibbar, wobei die Betriebsart in Abhängigkeit des jeweils in der Getriebevorrichtung 1 eingelegten Fahrbereiches in der später beschriebenen Art und Weise wechselt.

Zusätzlich ist die Getriebevorrichtung 1 als Vorgelegegetriebe mit mehreren zueinander beabstandeten Vorgelegewellen 12 bis 16 ausgebildet, womit die Getriebevorrichtung 1 in axialer Richtung einen geringen Bauraumbedarf und in radialer Richtung bzw. in Einbaulage in Hochrichtung einen hohen Bauraumbedarf aufweisen, wobei dieser zur Überbrückung eines Achsabstandes zwischen der Motorausgangswelle 2A der Antriebsmaschine 2 und der Getriebeausgangswelle 8 sowie den Antriebsachsen des vorliegend als Radlader ausgeführten Fahrzeuges vorgesehen ist.

Zwischen dem Getriebeeingang 7 und dem Plantetengetriebe 9 sind zwei Fahrtrichtungsschaltelemente KR und KV vorgesehen, mittels welchen zwischen einem Modus für Vorwärtsfahrt und einem Modus für Rückwärtsfahrt umgeschaltet werden kann. Im Bereich der dem Fahrtrichtungsschaltelement KR für Rückwärtsfahrt zugeordneten Vorgelegewelle 13 ist eine Hydraulikpumpe einer ersten Arbeitshydraulik und im Bereich der Vorgelegewelle 12 ist eine Hydraulikpumpe einer zweiten Arbeitshydraulik ankoppelbar und über die Antriebsmaschine 2 antreibbar. Ein Festrad 39 der Getriebeeingangswelle 7 steht hierfür mit einem Festrad 40 der weiteren Vorgelegewelle 13 und mit einem Festrad 41 der zusätzlichen Vorgelegewelle 12 in Eingriff. Im Bereich der Getriebeeingangswelle 7 ist eine Getriebepumpe 17 angeordnet, die direkt von der Antriebsmaschine 2 angetrieben wird.

Über die Getriebepumpe 17 ist neben einem die beiden Hydrostateinheiten 10 und 11 der Hydrostateinrichtung 4 miteinander verbindenden hydraulischen Kreislauf, der als geschlossener Kreislauf ausgebildet ist, auch ein Schmier- und Kühlkreislauf der Getriebevorrichtung 1 mit Hydraulikfluid beaufschlagbar. Zusätzlich sind die Schaltelemente K1 bis K3 sowie die Fahrtrichtungsschaltelemente KR und KV über die Getriebepumpe 17 mit hydraulischem Arbeitsdruck beaufschlagbar und von einem im Wesentlichen geöffneten Betriebszustand in einen im Wesentlichen vollständig geschlossenen Betriebszustand überführbar.

Sowohl die Schaltelemente K1 bis K3 als auch die Fahrtrichtungsschaltelemente KR und KV sind als reibschlüssige Lastschaltelemente ausgebildet, womit während der synchronen Bereichswechsel trotzdem eventuell vorliegende Differenzdrehzahlen im Bereich der Schaltelemente K1 bis K3 und der Fahrtrichtungsschaltelemente KR und KV ausgleichbar sind.

Das Planetengetriebe 9 weist vorliegend zwei Sonnenräder 21, 22 auf, welche mit gemeinsamen Doppelplanetenrädern 23 kämmen, die wiederum auf einem Planetenträger 24 drehbar gelagert sind. Die Getriebeeingangswelle 7 ist über die Fahrtrichtungsschaltelemente KV und KR und über ein Zahnrad 18, das sowohl mit einem mit der Vorgelegewelle 13 über das Fahrtrichtungsschaltelement KR drehfest verbindbaren Losrad 19 oder einem über das Fahrtrichtungsschaltelement KV drehfest mit der Getriebeeingangswelle 7 verbindbaren weiteren Losrad 20 kämmt, mit dem Planetenträger 24 in Wirkverbindung bringbar. Zusätzlich kämmen die Doppelplanetenräder 23 mit einem Hohlrad 25, das über ein Festrad 26 mit einem weiteren Festrad 27 einer mit der zweiten Hydraulikeinheit 11 wirkverbundenen Hydrostatwelle 28 der Hydrostateinrichtung 4 in Eingriff steht.

Die erste Hydrostateinheit 10 ist vorliegend über eine weitere Hydrostatwelle 29 drehfest mit dem zweiten Sonnenrad 22 des Planetengetriebes 9 verbunden.

In Abhängigkeit des Schluckvolumens der ersten Hydraulikeinheit 10 bzw. der zweiten Hydraulikeinheit 11 und eines Fördervolumens der zweiten Hydraulikeinheit 11 bzw. der ersten Hydraulikeinheit 10 ist im zweiten Fahrbereich jeweils wenigstens ein Teil des von der Antriebsmaschine 2 anliegenden Drehmomentes über den Planetenträger 24 des Planetengetriebes 9 und die Doppelplanetenräder 23 sowie das Hohlrad 25 oder auf das erste Sonnenrad 21 des Planetengetriebes 9 und ein damit drehfest verbundenes Festrad 30 in den die mechanische Einrichtung 6 aufweisenden zweiten Leistungszweig 5 einleitbar.

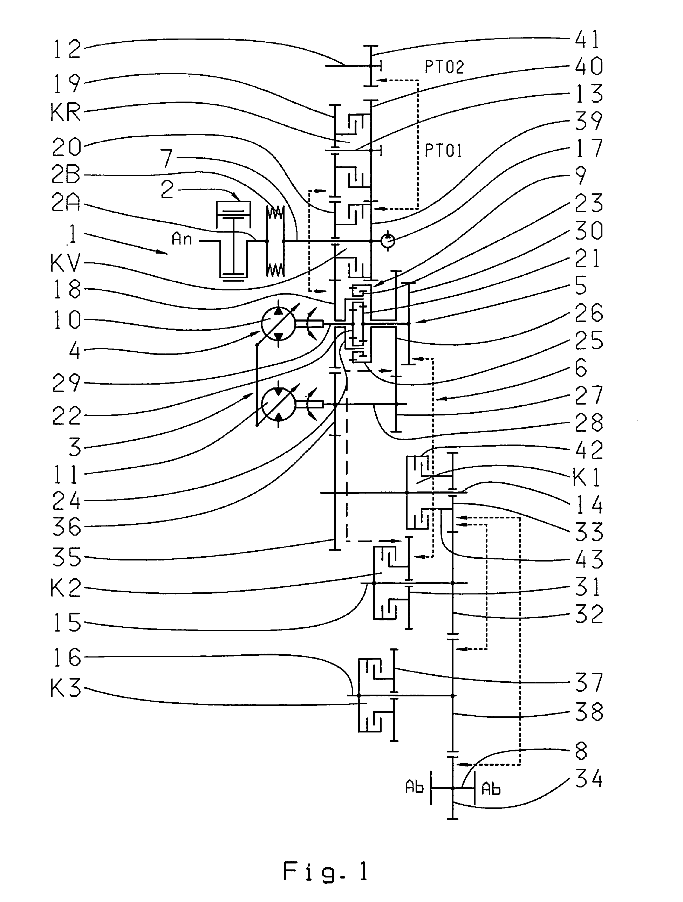

Grundsätzlich wird der Antrieb der Antriebsmaschine 2 bei dem in Fig. 1 dargestellten Ausführungsbeispiel der Getriebevorrichtung 1 über das Fahrtrichtungsschaltelement KR oder KV in den Planetenträger 24 des Planetengetriebes 9 eingeleitet. Ausgehend vom Planetenträger 24 wird ein in Abhängigkeit des Betriebszustandes der Hydrostateinrichtung 4 stehender Teil des Antriebsmomentes der Antriebsmaschine 2 bei geschlossenem ersten Schaltelement K1, über welches der erste Fahrbereich in der Getriebevorrichtung 1 einlegbar ist, über die Doppelplanetenräder 23 und das zweite Sonnenrad 22 in die erste Hydraulikeinheit 10 eingeleitet, die bei eingelegtem ersten Fahrbereich als Pumpe betrieben wird. Der mechanische Antrieb erfolgt dann über das Hohlrad 25 und das damit drehfest verbundene Festrad 26, das mit dem Festrad 27 der ersten Hydrostatwelle 28 kämmt.

Über das erste Schaltelement K1 ist ein Losrad 33 drehfest mit der Vorlegewelle 14 verbindbar, womit das Antriebsmoment der Antriebsmaschine 2 von einem mit einem Festrad 35 kämmenden weiteren Festrad 36 der Hydrostatwelle 28 auf das Losrad 33 der Vorgelegewelle 14 und ein damit kämmendes Festrad 34 der Getriebeausgangswelle 8 führbar ist.

Steht die dann als Motor betriebene zweite Hydraulikeinheit 11 still und läuft die als Pumpe betriebene erste Hydrostateinheit 10 mit maximaler Drehzahl, ist das Schluckvolumen der zweiten Hydrostateinheit 11 maximal, während das Fördervolumen der ersten Hydrostateinheit gleich Null ist. Die Antriebsleistung der Antriebsmaschine 2 wird dann vollständig hydrostatisch über die Getriebeeinrichtung 1 übertragen, wobei dies der ersten Grenze des ersten Fahrbereiches entspricht.

Die zweite Grenze des über das Schaltelement K1 einstellbaren ersten Fahrbereiches liegt dann vor, wenn die als Pumpe betriebene erste Hydraulikeinheit 10 stillsteht und die Drehzahl der als Motor betriebenen zweiten Hydraulikeinheit 11 maximal ist, wobei das Schluckvolumen der zweiten Hydraulikeinheit 11 dann gleich Null ist und das Fördervolumen der ersten Hydraulikeinheit 10 einen maximalen Wert aufweist. In diesem Betriebszustand des Hydrostaten 4 wird die Antriebsleistung der Antriebsmaschine 2 über die Getriebevorrichtung 1 vollständig mechanisch zwischen der Getriebeeingangswelle 7 und der Getriebeausgangswelle 8 übertragen.

Liegt eine entsprechende Anforderung zum Einlegen des zweiten Fahrbereiches in der Getriebevorrichtung 1 vor, werden die beiden Hydraulikeinheiten 10 und 11 verschwenkt, bis das zweite Schaltelement K2 im Wesentlichen im synchronen Betriebszustand vorliegt. Anschließend wird das Schaltelement K2 geschlossen und gleichzeitig das erste Schaltelement K1 geöffnet. Bei eingelegtem zweiten Fahrbereich wird die erste Hydraulikeinheit 10 motorisch und die zweite Hydraulikeinheit 11 als Pumpe betrieben, womit das Antriebsmoment der Antriebsmaschine 2 über den Planetenträger 24, die Doppelplanetenräder 23, das Hohlrad 25, das Festrad 26, das weitere Festrad 27 und die Hydrostatwelle 28 zumindest zu einem Teil in die zweite Hydrostateinheit 11 eingeleitet wird.

In Abhängigkeit der Schwenkstellung der beiden Hydrostateinheiten 10 und 11 wird ein damit korrespondierender Anteil des Antriebsmomentes der Antriebsmaschine 2 an die erste Hydrostateinheit 10 weitergeleitet und über die Hydrostatwelle 29 und das zweite Sonnenrad 22 auf die Doppelplanetenräder 23 weitergeleitet. Das ebenfalls mit den Doppelplanetenrädern 23 kämmende zweite Sonnenrad 21 kämmt über das Festrad 30 mit einem in geschlossenem Betriebszustand des zweiten Schaltelementes K2 drehfest mit der Vorgelegewelle 15 verbundenen Losrad 31. Das Antriebsmoment der Antriebsmaschine 2 wird über ein Festrad 32 der Vorgelegewelle 15 auf das damit kämmende Losrad 33 der Vorgelegewelle 14 und das damit wiederum in Eingriff stehende Festrad 34 der Getriebeausgangswelle 8 weitergeleitet.

Liegt wiederum eine Anforderung für einen Fahrbereichswechsel ausgehend vom zweiten Fahrbereich in den dritten Fahrbereich vor, wird die Hydrostateinrichtung 4 entsprechend verstellt, um das dritte Schaltelement K3 bei noch geschlossenem zweitem Schaltelement K2 in einen synchronen Betriebszustand zu überführen. Liegt das dritte Schaltelement K3 wenigstens annähernd in seinem synchronen Betriebszustand vor, wird dieses geschlossen und das zweite Schaltelement K2 in seinen geöffneten Betriebszustand überführt, wobei durch das Schließen des dritten Schaltelements K3 ein Losrad 37 drehfest mit der Vorgelegewelle 16 verbunden wird, das mit dem mit dem Hohlrad 25 verbundenen Festrad 26 kämmt. Das Drehmoment wird von einem Festrad 38 der Vorgelegewelle 16 auf das damit kämmende Losrad 33 der Vorgelegewelle 14 und das wiederum damit in Eingriff stehende Festrad 34 der Getriebeausgangswelle 8 geführt. Die zweite Hydraulikeinheit 11 wird bei eingelegtem dritten Fahrbereich wiederum motorisch betrieben, während die erste Hydraulikeinheit 10 wie bei eingelegtem ersten Fahrbereich in den Pumpenbetrieb übergeht.

In dem über das erste Schaltelement K1 zuschaltbaren ersten Fahrbereich ist in der Getriebevorrichtung 1 die größte Übersetzung einstellbar, während in dem über das zweite Schaltelement K2 zuschaltbaren zweiten Fahrbereich ein mittlerer und in dem über das dritte Schaltelement K3 zuschaltbaren dritten Fahrbereich der kleinste Übersetzungsbereich in der Getriebevorrichtung 1 einstellbar ist. Die drei Fahrbereiche sind derart ausgelegt, dass sich der erste Fahr- bzw. Übersetzungsbereich und der zweite Übersetzungsbereich sowie der zweite Übersetzungsbereich und der dritte Übersetzungsbereich überlappen und die Übersetzungen der Getriebevorrichtung 1 über den gesamten Übersetzungsbereich der Getriebevorrichtung 1, der sich vom unteren Grenzwert der Übersetzung des ersten Fahrbereichs bis zum oberen Grenzwert der Übersetzung des dritten Fahrbereichs erstreckt, stufenlos und für den Fahrer eines mit der Getriebevorrichtung ausgeführten Fahrzeuges nicht merkbar sowie zugkraftunterbrechungsfrei veränderbar ist.

Die im Baumaschinenbereich einsetzbare Getriebevorrichtung 1 stellt ein stufenlos verstellbares Getriebe dar, mittels dem hohe Zugkräfte und Fahrgeschwindigkeiten von vorzugsweise bis zu 40 km/h realisierbar sind. Alle Schaltelemente K1 bis K3 sind auf separaten Vorgelegewellen 14, 15 und 16 angeordnet, womit bei der Anwendung der Getriebevorrichtung 1 im Baumaschinenbereich mit niedrigeren Zugkraftanforderungen die Getriebevorrichtung auf einfache Art und Weise als Zweibereichsgetriebe darstellbar ist, das dann ohne das dritte Schaltelement K3, die Vorgelegewelle 16, das Festrad 38 und das Losrad 37 ausgebildet ist. Die Getriebevorrichtung 1 stellt somit eine hohe Modularität zur Verfügung und ist ohne Änderungen des Getriebegehäuses sowie der Anschlüsse der Getriebeausgangswelle 8 sowohl als Dreibereichsgetriebe als auch als Zweibereichsgetriebe bei gleichem Bauraumbedarf zur Verfügung stellbar.

Da die drei Bereichsübergänge zwischen den Fahrbereichen jeweils im synchronen Betriebszustand der Schaltelemente K1 bis K3, das heißt sowohl bei einem Hochschalten als auch bei einem Rückschalten zwischen den drei Fahrbereichen, synchron durchführbar sind, besteht auf einfache Art und Weise die Möglichkeit, die Schaltelement K1 bis K3 mit geringerer Leistungsfähigkeit auszuführen und zu dimensionieren, da jeweils nur eine geringe Reibarbeit von den Schaltelementen K1 bis K3 zu leisten ist und jeweils eine stark herabgesetzte Reibleistung im Vergleich zu nicht synchronen Bereichswechseln von den Schaltelementen K1 bis K3 aufgenommen werden muss.

Aufgrund der Anordnung der Schaltelemente K1 bis K3 auf separaten Vorgelegewellen 14 bis 16 und nicht wie bei aus der Praxis bekannten Getriebevorrichtungen auf der Hydrostatwelle 28 der Hydrostateinrichtung 4, liegen insbesondere bei eingelegtem dritten Fahrbereich an den leistungsführenden Bauteilen niedrigere Drehzahlen an, womit eine Belastung dieser Bauteile verringert ist.

Des Weiteren ist vorliegend ein Innenlamellenträger 43 des ersten Schaltelementes K1 mit dem Abtrieb bzw. der Getriebeausgangswelle 8 koppelbar, während ein Außenlamellenträger 42 mit der Vorgelegewelle 14 drehfest verbunden ist.

Bei in der Getriebevorrichtung 1 eingelegtem ersten Fahrbereich überträgt der mechanische Leistungszweig 5 Drehmoment vom Hohlrad 25 über das Festrad 26 auf das weitere Festrad 27. Hierbei findet eine Abzweigung vom Hohlrad 25 statt. Der hydrostatische Leistungszweig 3 wird vom zweiten Sonnenrad 22 abgezweigt. Dabei überträgt der hydrostatische Leistungszweig Leistung von der ersten Hydraulikeinheit 10 zur zweiten Hydraulikeinheit 11. Dabei wirkt die erste Hydraulikeinheit 10 als Pumpe und die zweite Hydraulikeinheit als Motor. Auf der ersten Hydrostatwelle 28 werden die mechanische Leistung und die hydrostatische Leistung summiert und über das Festrad 36 zum Abtrieb geführt. Im zweiten Fahrbereich wird die vom Planetenträger 24 kommende Leistung teilweise zum Hohlrad 25 verzweigt und über die Räder 26 und 27 auf die erste Hydrostatwelle 28 zur zweiten Hydraulikeinheit 11 geführt. Von der zweiten Hydraulikeinheit 11 wird die hydraulische Leistung zur ersten Hydraulikeinheit 10 geführt. Hierbei wirkt die erste Hydraulikeinheit 10 als Motor und die zweite Hydraulikeinheit als Pumpe. Vom zweiten Sonnenrad 22 wird die Leistung dann zum Doppelplanetenrad 23 geführt und dort summiert. Die Summenleistung wird vom ersten Sonnenrad 21 und dann vom Rad 30 zum Abtrieb geführt. Im dritten Fahrbereich wird die Leistung wie im ersten Fahrbereich geführt, wobei die Summenleistung vom Rad 26 zum Abtrieb geführt wird.

Die Festräder 39, 40 und 41 sind im Gegensatz zu der in der Zeichnung dargestellten Ausführung der Getriebevorrichtung 1 auch zwischen dem Getriebeeingang 7 und den Fahrtrichtungsschaltelementen KR und KV anordenbar, womit die Getriebevorrichtung 1 auf einfache Art und Weise an in einem Fahrzeug zur Verfügung stehenden Bauraum anpassbar ist.

Die motorseitige Anordnung der aus den Festrädern 39 bis 41 bestehenden Festräderkette bietet auf einfache Art und Weise die Möglichkeit, den mit der Vorgelegewelle 12 koppelbaren zweiten Leistungsabgriff im vorhandenen Fahrzeugeinbauraum unterzubringen. Insbesondere bei einer Anordnung der Getriebevorrichtung 1 in einem Radlader-Fahrzeugrahmen sind Kollisionen mit anderen Fahrzeugkomponenten minimiert, woraus sich erhebliche Vorteile ergeben.

Die Übersetzung im Bereich der Zahnradpaarung zwischen den Zahnrädern 36 und 35 ist unabhängig von der Ausführung der Getriebevorrichtung 1 als Zwei- oder Dreibereichsgetriebe jeweils identisch ausführbar, um die Differenzdrehzahlen zwischen den Schaltelementhälften des ersten Schaltelementes K1 im geöffneten Betriebszustand während der Darstellung des zweiten Fahrbereiches oder des dritten Fahrbereiches so gering wie möglich zu halten.

Dabei wird die Übertragungsfähigkeit des ersten Schaltelementes K1 so groß wie möglich vorgesehen, um die Übersetzung der Zahnradpaarung zwischen den Zahnrädern 36 und 35 möglichst groß vorsehen zu können und die Rückdrehzahlen im Bereich des ersten Schaltelementes K1 während der Darstellung des zweiten und des dritten Fahrbereiches möglichst gering zu halten.

Grundsätzlich sind die im Bereich der Schaltelemente K1 bis K3 vorgesehenen Zahnräder 35, 33, 31, 32, 37 und 38 in Abhängigkeit des jeweils vorliegenden Anwendungsfalles als Losrad oder als Festrad ausführbar. Des Weiteren sind die Zahnräder 37 und 38 der im Bereich des dritten Schaltelementes K3 angeordneten Vorgelegewelle 16 und die Zahnräder 35 und 33 der im Bereich des ersten Schaltelementes K1 angeordneten Vorgelegewelle 14 mit dem Zahnrad 26 oder einem damit kämmenden bzw. gekoppelten Zahnrad, d. h. vorliegend das Zahnrad 27 oder das Zahnrad 36, fest in Eingriff bringbar.

### Bezugszeichen

- 1: Getriebevorrichtung
- 2: Antriebsmaschine
- 2A: Motorausgangswelle
- 2B: Schwingungsdämpfer
- 3: erster Leistungszweig
- 4: Hydrostateinrichtung
- 5: zweiter Leistungszweig
- 6: mechanische Einrichtung
- 7: Getriebeeingangswelle
- 8: Getriebeausgangswelle
- 9: Getriebeeinrichtung
- 10: erste Hydraulikeinheit
- 11: zweite Hydraulikeinheit
- 12 bis 16: Vorgelegewelle
- 17: Getriebepumpe
- 18: Zahnrad
- 19: Losrad
- 20: Losrad
- 21: erstes Sonnenrad
- 22: zweites Sonnenrad
- 23: Doppelplanetenrad
- 24: Planetenträger
- 25: Hohlrad
- 26: Festrad
- 27: weiteres Festrad
- 28: erste Hydrostatwelle
- 29: zweite Hydrostatwelle
- 30: Festrad
- 31: Losrad
- 32: Festrad
- 33: Festrad
- 34: Festrad
- 35: Losrad
- 36: Festrad
- 37: Losrad
- 38: Losrad
- 39: Festrad
- 40: Festrad
- 41: Festrad
- 42: Außenlamellenträger
- 43: Innenlamellenträger
- K1 bis K3: Schaltelement
- KR, KV: Fahrtrichtungsschaltelement

## Patentansprüche

1. Getriebevorrichtung (1) mit Leistungsverzweigung, mit einem wenigstens eine Hydrostateinrichtung (4) mit wenigstens zwei Hydrostatwellen (28, 29) aufweisenden ersten Leistungszweig (3) und mit einem damit über eine Leistungsverzeigungseinrichtung wirkverbundenen zweiten Leistungszweig (5), wobei jeweils wenigstens zwei Fahrbereiche für Vorwärts- und Rückwärtsfahrt vorgesehen sind, welche jeweils über wenigstens ein abzuschaltendes Schaltelement (K1 bis K3) und wenigstens ein zuzuschaltendes Schaltelement (K1 bis K3) umschaltbar sind, wobei jedes der Schaltelemente (K1 bis K3) auf einer separaten Vorgelegewelle (14, 15, 16) angeordnet ist, wobei eine zur Darstellung eines weiteren Fahrbereiches vorgesehene Vorgelegewelle (16) über ein Zahnrad (37) mit einem mit einer Welle (25) der Leistungsverzweigungseinrichtung (9) wirkverbundenem Festrad (26) koppelbar ist, wobei die zur Leistungsverzweigung und zur Summierung der über die Leistungszweige führbaren Teile des anliegenden Drehmomentes vorgesehene Leistungsverzweigungseinrichtung (9) eine als Planetengetriebe ausgebildete Getriebeeinrichtung ist, welche zwei Sonnenräder (21, 22) aufweist, die mit gemeinsamen Doppelplanetenrädern (23) in Eingriff stehen, die wiederum mit einem Hohlrad (25) kämmen, **dadurch gekennzeichnet, dass** das Zahnrad (37) der zur Darstellung eines weiteren Fahrbereiches vorgesehenen Vorgelegewelle (16) mit einem mit dem Hohlrad (25) der Leistungsverzweigungseinrichtung (9) verbundenem Zahnrad (26) oder einem damit kämmendem Festrad in Eingriff steht.

2. Getriebevorrichtung nach Anspruch 1, **dadurch gekennzeichnet, dass** eine Schaltelementhälfte (42) eines ersten Schaltelementes (K1), über welches der erste Fahrbereich in zugeschaltetem Betriebszustand des Schaltelementes (K1) darstellbar ist, über ein Zahnrad (33) einer Vorgelegewelle (14) mit einer Getriebeausgangswelle (8) und eine weitere Schaltelementhälfte (43) des ersten Schaltelementes (K1) über ein weiteres Zahnrad (35) der Vorgelegewelle (14) mit der Hydrostateinrichtung (4) verbundenen Welle (28) in Wirkverbindung steht.

3. Getriebevorrichtung nach Anspruch 2, **dadurch gekennzeichnet, dass** das über das erste Schaltelement (K1) mit der zugeordneten Vorgelegewelle (14) drehfest verbindbare Zahnrad (33) mit der Getriebeausgangswelle (8) wirkverbunden ist und das Festrad (35) der Vorgelegewelle (14) mit einem Festrad (36) der der Hydrostateinrichtung (4) zugeordneten Hydrostatwelle (28) kämmt.

4. Getriebevorrichtung nach Anspruch 2 oder 3, **dadurch gekennzeichnet, dass** ein Außenlamellenträger (42) eines ersten Schaltelementes (K1) mit der dem ersten Schaltelement (K1) zugeordneten Vorgelegewelle (14) verbunden ist während ein Innenlamellenträger (43) mit einem auf der Vorgelegewelle (14) gelagerten Losrad (33) gekoppelt ist.

5. Getriebevorrichtung nach einem der Ansprüche 1 bis 4, **dadurch gekennzeichnet, dass** ein über ein zweites Schaltelement (K2), über welches der zweite Fahrbereich in zugeschaltetem Betriebszustand des zweiten Schaltelementes (K2) darstellbar ist, mit der zugeordneten Vorgelegewelle (15) drehfest verbindbares Losrad (31) mit einem drehfest mit dem ersten Sonnenrad (21) der Getriebeeinrichtung (9) verbundenen Festrad (30) kämmt und ein Festrad (32) der Vorgelegewelle (15) mit einem der Zahnräder (33) der dem ersten Schaltelement (K1) zugeordneten Vorgelegewelle (14) in Wirkverbindung steht.

6. Getriebevorrichtung nach einem der Ansprüche 1 bis 5, **dadurch gekennzeichnet, dass** zur Darstellung eines dritten Fahrbereiches ein weiteres auf der zusätzlichen Vorgelegewelle (16) angeordnetes Schaltelement (K3) vorgesehen ist.

7. Getriebevorrichtung nach Anspruch 6, **dadurch gekennzeichnet, dass** ein über das dritte Schaltelement (K3), über welches der dritte Fahrbereich in zugeschaltetem Betriebszustand des dritten Schaltelementes (K3) darstellbar ist, mit der zugeordneten Vorgelegewelle (16) drehfest verbindbares Losrad (37) mit einem weiteren Festrad (27) der der Hydrostateinrichtung (11) zugeordneten Hydrostatwelle (28) und ein Festrad (38) der Vorgelegewelle (16) mit der Getriebeausgangswelle (8) in Wirkverbindung steht.

8. Getriebevorrichtung nach Anspruch 6 oder 7, **dadurch gekennzeichnet, dass** die Leistung der beiden Leistungszweige (3, 5) im ersten und dritten Fahrbereich über eine mit der Hydrostateinrichtung (4) verbundene Welle (28) summiert wird.

9. Getriebevorrichtung nach einem der Ansprüche 1 bis 8, **dadurch gekennzeichnet, dass** ein Festrad (39) eines Getriebeeingangs (7) über ein Festrad (40) einer weiteren Vorgelegewelle (13) mit einer Hydraulikpumpe einer ersten Arbeitshydraulik und über ein Festrad (41) einer zusätzlichen Vorgelegewelle (12) mit einer Hydraulikpumpe einer zweiten Arbeitshydraulik verbindbar ist.

10. Getriebevorrichtung nach Anspruch 8 oder 9, **dadurch gekennzeichnet, dass** ein Getriebeeingang (7) über Fahrtrichtungsschaltelemente (KR, KV) mit einem Planetenträger (24) des Planetengetriebes (9) in Wirkverbindung bringbar ist.

11. Getriebevorrichtung nach Anspruch 10, **dadurch gekennzeichnet, dass** die Festräder (39, 40, 41) zwischen den Fahrtrichtungsschaltelementen (KR, KV) und dem Getriebeeingang (7) oder die Fahrtrichtungsschaltelemente (KR, KV) zwischen den Festrädern (39, 40, 41) und dem Getriebeeingang (7) angeordnet sind.

## Claims

1. Transmission apparatus (1) with power split, with a first power branch (3) which has at least one hydrostatic device (4) with at least two hydrostatic shafts (28, 29), and with a second power branch (5) which is operatively connected to the said first power branch (3) via a power split device, in each case at least two driving ranges for forward and reverse driving being provided which can be switched over in each case via at least one shifting element (K1 to K3) to be disconnected and at least one shifting element (K1 to K3) to be connected, each of the shifting elements (K1 to K3) being arranged on a separate countershaft (14, 15, 16), it being possible for a countershaft (16) which is provided to produce a further driving range to be coupled via a gearwheel (37) to a fixed gear (26) which is operatively connected to a shaft (25) of the power split device (9), the power split device (9) which is provided for power splitting and for summing the parts of the prevailing torque which can be conducted via the power branches being a gear device which is configured as a planetary gear mechanism and has two sun gears (21, 22) which are in engagement with common double planetary gears (23) which in turn mesh with an internal gear (25), **characterized in that** the gearwheel (37) of the countershaft (16) which is provided to produce a further driving range is in engagement with a gearwheel (26) which is connected to the internal gear (25) of the power split device (9) or with a fixed gear which meshes with the said gearwheel (26).

2. Transmission apparatus according to Claim 1, **characterized in that** a shifting element half (42) of a first shifting element (K1), via which the first driving range can be produced in the connected operating state of the shifting element (K1), is operatively connected via a gearwheel (33) of a countershaft (14) to a transmission output shaft (8), and a further shifting element half (43) of the first shifting element (K1) is operatively connected via a further gearwheel (35) of the countershaft (14) to the shaft (28) which is connected to the hydrostatic device (4).

3. Transmission apparatus according to Claim 2, **characterized in that** the gearwheel (33) which can be connected fixedly via the first shifting element (K1) to the associated countershaft (14) so as to rotate with it is operatively connected to the transmission output shaft (8), and the fixed gear (35) of the countershaft (14) meshes with a fixed gear (36) of the hydrostatic shaft (28) which is assigned to the hydrostatic device (4).

4. Transmission apparatus according to Claim 2 or 3, **characterized in that** an outer disc carrier (42) of a first shifting element (K1) is connected to the countershaft (14) which is assigned to the first shifting element (K1), whereas an inner disc carrier (43) is coupled to a movable gear (33) which is mounted on the countershaft (14).

5. Transmission apparatus according to one of Claims 1 to 4, **characterized in that** a movable gear (31) which can be connected fixedly to the associated countershaft (15) so as to rotate with it via a second shifting element (K2), via which the second driving range can be produced in the connected operating state of the second shifting element (K2), meshes with a fixed gear (30) which is connected fixedly to the first sun gear (21) of the gear device (9) so as to rotate with it, and a fixed gear (32) of the countershaft (15) is operatively connected to one of the gearwheels (33) of the countershaft (14) which is assigned to the first shifting element (K1).

6. Transmission apparatus according to one of Claims 1 to 5, **characterized in that** a further shifting element (K3) which is arranged on the additional countershaft (16) is provided to produce a third driving range.

7. Transmission apparatus according to Claim 6, **characterized in that** a movable gear (37) which can be connected fixedly to the associated countershaft (16) so as to rotate with it via the third shifting element (K3), via which the third driving range can be produced in the connected operating state of the third shifting element (K3), is operatively connected to a further fixed gear (27) of the hydrostatic shaft (28) which is assigned to the hydrostatic device (11), and a fixed gear (38) of the countershaft (16) is operatively connected to the transmission output shaft (8).

8. Transmission apparatus according to Claim 6 or 7, **characterized in that** the power of the two power branches (3, 5) is summed in the first and third driving range via a shaft (28) which is connected to the hydrostatic device (4).

9. Transmission apparatus according to one of Claims 1 to 8, **characterized in that** a fixed gear (39) of a transmission input (7) can be connected via a fixed gear (40) of a further countershaft (13) to a hydraulic pump of a first working hydraulic system and via a fixed gear (41) of an additional countershaft (12) to a hydraulic pump of a second working hydraulic system.

10. Transmission apparatus according to Claim 8 or 9, **characterized in that** a transmission input (7) can be operatively connected via driving direction shifting elements (KR, KV) to a planetary carrier (24) of the planetary gear mechanism (9).

11. Transmission apparatus according to Claim 10, **characterized in that** the fixed gears (39, 40, 41) are arranged between the driving direction shifting elements (KR, KV) and the transmission input (7) or the driving direction shifting elements (KR, KV) are arranged between the fixed gears (39, 40, 41) and the transmission input (7).

## Revendications

1. Dispositif de transmission (1) à dérivation de puissance, comportant une première branche de puissance (3) comprenant au moins un dispositif hydrostatique (4) doté d'au moins deux arbres hydrostatiques (28, 29) et comportant une deuxième branche de puissance (5) en liaison fonctionnelle avec celle-ci par le biais d'un dispositif de dérivation de puissance, au moins deux plages de conduite pour la marche avant et la marche arrière étant respectivement prévues, lesquelles peuvent être respectivement commutées par le biais d'au moins un élément de commutation (K1 à K3) à déconnecter et d'au moins un élément de commutation (K1 à K3) à connecter, chacun des éléments de commutation (K1 à K3) étant disposé sur un arbre intermédiaire séparé (14, 15, 16), un arbre intermédiaire (16) prévu pour réaliser une plage de conduite supplémentaire pouvant être accouplé, par le biais d'une roue dentée (37), à une roue fixe (26) en liaison fonctionnelle avec un arbre (25) du dispositif de dérivation de puissance (9), le dispositif de dérivation de puissance (9) prévu pour la dérivation de puissance et pour l'addition des parties, pouvant être guidées par le biais des branches de puissance, du couple appliqué étant un dispositif de transmission réalisé sous forme de transmission planétaire, lequel comprend deux roues solaires (21, 22) qui viennent en prise avec des roues planétaires doubles communes (23) qui pour leur part s'engrènent avec une couronne (25), **caractérisé en ce que** la roue dentée (37) de l'arbre intermédiaire (16) prévu pour réaliser une plage de conduite supplémentaire est en prise avec une roue dentée (26) reliée à la couronne (25) du dispositif de dérivation de puissance (9) ou avec une roue fixe s'engrenant avec cette roue dentée.

2. Dispositif de transmission selon la revendication 1, **caractérisé en ce qu'**une moitié d'élément de commutation (42) d'un premier élément de commutation (K1), par le biais duquel la première plage de conduite peut être réalisée dans l'état de fonctionnement connecté de l'élément de commutation (K1), est en liaison fonctionnelle, par le biais d'une roue dentée (33) d'un arbre intermédiaire (14), avec un arbre de sortie de transmission (8), et une moitié d'élément de commutation supplémentaire (43) du premier élément de commutation (K1) est en liaison fonctionnelle, par le biais d'une roue dentée supplémentaire (35) de l'arbre intermédiaire (14), avec l'arbre (28) relié au dispositif hydrostatique (4).

3. Dispositif de transmission selon la revendication 2, **caractérisé en ce que** la roue dentée (33) pouvant être reliée de manière solidaire en rotation à l'arbre intermédiaire associé (14) par le biais du premier élément de commutation (K1) est en liaison fonctionnelle avec l'arbre de sortie de transmission (8) et la roue fixe (35) de l'arbre intermédiaire (14) s'engrène avec une roue fixe (36) de l'arbre hydrostatique (28) associé au dispositif hydrostatique (4).

4. Dispositif de transmission selon la revendication 2 ou 3, **caractérisé en ce qu'**un support de disques extérieur (42) d'un premier élément de commutation (K1) est relié à l'arbre intermédiaire (14) associé au premier élément de commutation (K1), tandis qu'un support de disques intérieur (43) est accouplé à une roue folle (33) montée sur l'arbre intermédiaire (14).

5. Dispositif de transmission selon l'une quelconque des revendications 1 à 4, **caractérisé en ce qu'**une roue folle (31) pouvant être reliée de manière solidaire en rotation à l'arbre intermédiaire associé (15), par le biais d'un deuxième élément de commutation (K2) par le biais duquel la deuxième plage de conduite peut être réalisée dans l'état de fonctionnement connecté du deuxième élément de commutation (K2), s'engrène avec une roue fixe (30) reliée de manière solidaire en rotation à la première roue solaire (21) du dispositif de transmission (9), et une roue fixe (32) de l'arbre intermédiaire (15) est en liaison fonctionnelle avec l'une des roues dentées (33) de l'arbre intermédiaire (14) associé au premier élément de commutation (K1).

6. Dispositif de transmission selon l'une quelconque des revendications 1 à 5, **caractérisé en ce qu'**un élément de commutation (K3) supplémentaire disposé sur l'arbre intermédiaire supplémentaire (16) est prévu pour réaliser une troisième plage de conduite.

7. Dispositif de transmission selon la revendication 6, **caractérisé en ce qu'**une roue folle (37) pouvant être reliée de manière solidaire en rotation à l'arbre intermédiaire associé (16), par le biais du troisième élément de commutation (K3) par le biais duquel la troisième plage de conduite peut être réalisée dans l'état de fonctionnement connecté du troisième élément de commutation (K3), est en liaison fonctionnelle avec une roue fixe supplémentaire (27) de l'arbre hydrostatique (28) associé au dispositif hydrostatique (11) et une roue fixe (38) de l'arbre intermédiaire (16) est en liaison fonctionnelle avec l'arbre de sortie de transmission (8).

8. Dispositif de transmission selon la revendication 6 ou 7, **caractérisé en ce que** la puissance des deux branches de puissance (3, 5) est additionnée dans la première et la troisième plage de conduite par le biais d'un arbre (28) relié au dispositif hydrostatique (4).

9. Dispositif de transmission selon l'une quelconque des revendications 1 à 8, **caractérisé en ce qu'**une roue fixe (39) d'une entrée de transmission (7) peut être reliée, par le biais d'une roue fixe (40) d'un arbre intermédiaire supplémentaire (13), à une pompe hydraulique d'un premier système hydraulique de travail et, par le biais d'une roue fixe (41) d'un arbre intermédiaire supplémentaire (12), à une pompe hydraulique d'un deuxième système hydraulique de travail.

10. Dispositif de transmission selon la revendication 8 ou 9, **caractérisé en ce qu'**une entrée de transmission (7) peut être amenée en liaison fonctionnelle, par le biais d'éléments de commutation de sens de conduite (KR, KV), avec un porte-satellites (24) de la transmission planétaire (9).

11. Dispositif de transmission selon la revendication 10, **caractérisé en ce que** les roues fixes (39, 40, 41) sont disposées entre les éléments de commutation de sens de conduite (KR, KV) et l'entrée de transmission (7) ou les éléments de commutation de sens de conduite (KR, KV) sont disposés entre les roues fixes (39, 40, 41) et l'entrée de transmission (7).
